(19) Europäisches Patentamt / European Patent Office / Office européen des brevets

(11) **EP 1 939 767 A1**

(12) **DEMANDE DE BREVET EUROPEEN**

(43) Date de publication:
**02.07.2008 Bulletin 2008/27**

(51) Int Cl.:
***G06F 17/30*** (2006.01)

(21) Numéro de dépôt: **07122997.5**

(22) Date de dépôt: **12.12.2007**

| | |
|---|---|
| (84) Etats contractants désignés:<br>**AT BE BG CH CY CZ DE DK EE ES FI FR GB GR HU IE IS IT LI LT LU LV MC MT NL PL PT RO SE SI SK TR**<br>Etats d'extension désignés:<br>**AL BA HR MK RS**<br><br>(30) Priorité: **22.12.2006 FR 0655868**<br><br>(71) Demandeur: **FRANCE TELECOM**<br>**75015 Paris (FR)** | (72) Inventeur: **Lassalle, Edmond**<br>**22300, LANNION (FR)**<br><br>(74) Mandataire: **Lapoux, Roland**<br>**Cabinet Martinet & Lapoux,**<br>**43 Boulevard Vauban,**<br>**B.P. 405,**<br>**Guyancourt**<br>**78055 Saint Quentin Yvelines Cedex (FR)** |

(54) **Construction d'un fichier de données de cooccurrence de grande taille**

(57) Un système informatique pour construire un fichier de données de cooccurrence comporte des première et deuxième mémoires. Un module (DI) dimensionne la taille du fichier par un recensement d'objets distincts dans un corpus (C). Un module (DV) divise la taille du fichier en blocs ($B_{ij}$) occupant un espace mémoire sensiblement au plus égal à la taille de la première mémoire, chaque bloc faisant correspondre des objets entre eux. Un module (TR) traite chaque bloc du fichier en lisant le corpus et en incrémentant d'une unité un compte associé à des objets du bloc si ces objets sont groupés dans le corpus en satisfaisant à un critère, chaque groupement d'objets correspondant à une donnée de cooccurrence. A la fin de la lecture du corpus, le bloc traité dans la première mémoire est transféré vers le fichier dans la deuxième mémoire.

FIG. 1

**Description**

La présente invention concerne une construction d'un fichier de données de cooccurrence de grande taille à partir d'un corpus d'objets initial.

Le principe de la cooccurrence consiste à rechercher la présence d'une relation entre des objets au sein d'un corpus d'objets initial à observer selon un critère de cooccurrence spécifique et est applicable à divers domaines. Dans le domaine linguistique, plus particulièrement pour l'acquisition automatique de connaissances sémantiques à partir de documents textuels, le principe de cooccurrence concerne l'observation de couple mot - mot ou de couple mot - document au sein d'une collection de document selon, par exemple, un critère de position des mots dans les documents. Dans le domaine de la biologie, le principe de cooccurrence comprend une observation de la présence de sous-séquences identiques des objets gène, médicament et cellule à l'intérieur de séquences moléculaires pour identifier des interactions entre ces différents objets.

La relation de cooccurrence entre des objets au sein d'un corpus d'objets peut être binaire entre deux objets ou n-aires entre n objets. Formellement, une relation de cooccurrence est un sous-ensemble de l'ensemble produit $O^n$ où $O$ est l'ensemble des objets du corpus et n est un entier supérieur ou égal à 2. S'agissant d'un sous-ensemble construit à partir d'observations du corpus, la relation de cooccurrence entre des objets ne peut être définie que par le recensement exhaustif de tous les couples ou n-uplets qui la constituent. Un recensement consiste à réaliser une suite d'observations du corpus. Les objets présents dans une observation et satisfaisant au critère de cooccurrence sont appariés en couples ou regroupés en n-uplets, appelés également données de cooccurrence. Du fait de la réapparition possible de mêmes données de cooccurrence au sein de différentes observations, il est intéressant de les pondérer par un compte fréquentiel, ce qui permet ensuite, par d'autres procédés d'analyse, d'évaluer leur importance relative au sein du même corpus et d'en déduire la relation qui les lie.

Un exemple d'application finale relative au principe de cooccurrence concerne un procédé d'apprentissage automatique pour construire des bases de données sémantiques utilisables lors d'une recherche de documents selon un thème précis.

Un tel procédé d'apprentissage automatique basé sur le principe de cooccurrence a avantageusement une conception simplifiée par rapport à d'autres approches d'apprentissage automatique de construction de bases de données sémantiques. Cependant pour des applications de grande taille, la difficulté majeure concerne le volume important des données de cooccurrence à mémoriser. En effet, pour des applications à grande échelle, le nombre d'objet peut atteindre facilement 1 000 000. Par exemple, en tenant compte des formes fléchies, le vocabulaire potentiel de la langue française est de l'ordre de 600 000 à 700 000 formes. En ajoutant les expressions figées ainsi que la terminologie, on arrive rapidement au chiffre cité de 1 000 000.

Pour le comptage fréquentiel d'une relation de cooccurrence de type binaire, on doit potentiellement mémoriser 1 000 000 x 1 000 000 différents couples d'objets. Pour les relations n-aires, l'espace de stockage est au minimum de $(1\ 000\ 000)^n$ différents n-uplets. Un stockage de grandes quantités de données en mémoire centrale à accès aléatoire étant techniquement impossible, une alternative serait d'utiliser des mémoires secondaires tels que des disques durs. Cette solution n'est pas acceptable à cause du temps de calcul prohibitif induit par les accès aux disques pendant la phase d'apprentissage. En effet, durant cette phase, les données de cooccurrence ne sont pas connues à l'avance. La découverte des données de cooccurrence au fur et à mesure de l'exploration du corpus d'objets nécessite un accès aléatoire aux données mémorisées afin de différencier les nouvelles données de cooccurrence de celles déjà recensées, et de réactualiser le compte fréquentiel lorsque des mêmes données de cooccurrence sont à nouveau observées.

Pour contourner cette difficulté, des solutions existantes s'appuient sur des hypothèses simplificatrices pour réduire la taille des données de cooccurrence afin de pouvoir les traiter en mémoire centrale. Cependant la simplification des données se fait au détriment de la précision, de la qualité des résultats attendus et de la portée des applications. Ainsi, pour des applications comme la catégorisation des documents, une simplification peut donner des résultats acceptables, mais pour des applications comme l'indexation sémantique de documents, une simplification va dégrader les performances de l'indexation, cette dernière étant dépendante de l'exhaustivité, de la quantité et de la qualité des données de cooccurrence apprises.

Pour remédier aux inconvénients évoqués ci-dessus, un procédé selon l'invention pour construire un fichier de données de cooccurrence relatif à un corpus d'objets dans un système informatique comprenant des première et deuxième mémoires, est caractérisé en ce qu'il comprend les étapes de :

dimensionner la taille du fichier de données de cooccurrence par un recensement d'objets distincts dans le corpus, diviser la taille du fichier de données de cooccurrence en blocs occupant un espace mémoire au plus égal à la taille d'un bloc tampon de la première mémoire, chaque bloc du fichier faisant correspondre des objets recensés entre eux, traiter chaque bloc du fichier en lisant le corpus et en incrémentant d'une unité un compte fréquentiel associé à des objets du bloc si ces objets sont groupés dans le corpus lu en satisfaisant à un critère de cooccurrence, chaque groupement d'objets correspondant à une donnée de cooccurrence, et

transférer les données de cooccurrence et leurs comptes fréquentiels associés non nuls depuis le bloc tampon de la première mémoire vers le fichier de données de cooccurrence dans la deuxième mémoire.

L'invention construit de manière exhaustive à partir du corpus d'objet un fichier pouvant contenir un volume important de données de cooccurrence, en utilisant un périphérique de stockage, en tant que deuxième mémoire du système informatique, pour stocker le fichier, et en s'appuyant sur une mémoire centrale de processeur, en tant que première mémoire, pour recenser les données de cooccurrence et mettre à jour les comptes fréquentiels associés. La difficulté de volumétrie de données de cooccurrence en mémoire est levée selon l'invention par la division du fichier de données de cooccurrence en des blocs traités par la mémoire centrale et transférés une fois traités dans le périphérique de stockage. L'invention offre de nouvelles perspectives telles que la construction automatique de réseaux sémantiques de très grande taille, la réalisation d'opérations matricielles sur des données dépassant la capacité de la mémoire centrale, et la mise en oeuvre de traitements aujourd'hui inexploitables à grande échelle dans l'analyse et dans l'indexation basées sur la sémantique.

Selon une première réalisation de l'invention destinée notamment à une relation de cooccurrence binaire à densité élevée, le fichier de données de cooccurrence est une matrice faisant correspondre des objets distincts du corpus entre eux, la matrice étant divisée en blocs de taille identique au plus égale à la taille du bloc tampon de la première mémoire, et chaque bloc étant traité dans la première mémoire pendant une lecture du corpus d'objet et les données de cooccurrence et leurs comptes fréquentiels associés non nuls dans le bloc traité sont transférés dans la matrice.

Selon une deuxième réalisation destinée notamment à une relation de cooccurrence binaire à densité faible ou à une relation de cooccurrence n-aire, le fichier de cooccurrence est une table unidimensionnelle initialement nulle, chaque bloc traité dans la première mémoire et appartenant à la table unidimensionnelle varie en fonction de la taille du bloc tampon et du nombre maximal de données de cooccurrence du corpus d'objets non encore recensés dans la table unidimensionnelle.

Selon une caractéristique de la deuxième réalisation, le traitement d'un bloc de la table unidimensionnelle dans le bloc tampon comprend les étapes de :

dimensionner le bloc tampon par des données caractéristiques minimales et maximales en fonction du nombre d'objets distincts recensés dans le corpus d'objets,

remplir au fur et à mesure de la lecture du corpus une table de hachage incluse dans le bloc tampon avec des données de cooccurrence distinctes et respectivement associées à des comptes fréquentiels, les données de cooccurrence étant comprises entre les données caractéristiques minimales et maximales du bloc tampon,

transférer toutes les données de cooccurrence et les comptes fréquentiels associés de la table de hachage vers le bloc traité dès que la table de hachage est pleine, les données de cooccurrence et les comptes fréquentiels associés étant triés selon un ordre spécifique dans le bloc traité,

écrêter le bloc traité si le bloc tampon est plein et redimensionner les données caractéristiques minimales et maximales du bloc tampon en fonction de l'écrêtage du bloc traité,

réitérer les trois étapes précédentes tant que la lecture du corpus d'objets n'est pas terminée, et

transférer toutes les données de cooccurrence et les comptes fréquentiels associés depuis le bloc traité dans le bloc tampon vers la table unidimensionnelle de la deuxième mémoire à la fin de la lecture du corpus d'objets.

L'invention a aussi pour objet un système informatique comprenant des première et deuxième mémoires pour construire un fichier de données de cooccurrence relatif à un corpus d'objets, caractérisé en ce qu'il comprend :

un moyen pour dimensionner la taille du fichier de données de cooccurrence par un recensement d'objets distincts dans le corpus,

un moyen pour diviser la taille du fichier de données de cooccurrence en blocs occupant un espace mémoire au plus égal à la taille d'un bloc tampon de la première mémoire, chaque bloc du fichier faisant correspondre des objets recensés entre eux,

un moyen pour traiter chaque bloc du fichier en lisant le corpus et en incrémentant d'une unité un compte fréquentiel associé à des objets du bloc si ces objets sont groupés dans le corpus lu en satisfaisant à un critère de cooccurrence, chaque groupement d'objets correspondant à une donnée de cooccurrence, et

un moyen pour transférer les données de cooccurrence et leurs comptes fréquentiels associés non nuls depuis le bloc tampon de la première mémoire vers le fichier de données de cooccurrence dans la deuxième mémoire.

L'invention se rapporte encore à un programme d'ordinateur apte à être mis en oeuvre dans un système informatique comprenant des première et deuxième mémoires pour construire un fichier de données de cooccurrence relatif à un corpus d'objet, ledit programme étant caractérisé en ce qu'il comprend des instructions qui, lorsque le programme est chargé et exécuté dans ledit système informatique, réalisent les étapes conforme au procédé de construction de fichier de données de cooccurrence selon l'invention.

Enfin, l'invention se rapporte à un procédé de reformulation automatique d'une requête de recherche dans une application de recherche, caractérisé en ce qu'il comprend une étape de construction d'une base de connaissance à partir d'un fichier de cooccurrence construit selon le procédé conforme à l'invention pour construire un fichier de données de cooccurrence.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un système informatique mettant en oeuvre un procédé de construction de fichier de données de cooccurrence selon une première réalisation de l'invention ;
- la figure 2 montre une matrice en tant que fichier de données de cooccurrence selon la première réalisation de l'invention ;
- les figures 3 et 4 montrent respectivement un bloc tampon et l'un des blocs de la matrice, selon la première réalisation ;
- les figures 5 et 6 sont des parties successives d'un algorithme d'un procédé de construction de fichier de données de cooccurrence selon la première réalisation ;
- la figure 7 est un bloc-diagramme schématique d'un système informatique mettant en oeuvre le procédé de construction de fichier de données de cooccurrence selon une deuxième réalisation de l'invention ;
- la figure 8 montre une table de hachage selon la deuxième réalisation ;
- la figure 9 montre une table de dichotomie selon la deuxième réalisation ; et
- les figures 10 et 11 sont des parties successives d'un algorithme d'un procédé de construction de fichier de données de cooccurrence selon la deuxième réalisation.

L'invention est dirigée vers la construction d'un fichier de données de cooccurrence recensant de manière exhaustive un volume important de données de cooccurrence et leurs fréquences d'apparition, appelées comptes fréquentiels, à partir d'un corpus d'objets initial et selon une relation de cooccurrence souhaitée.

Les données de cooccurrence sont des regroupements d'objets distincts inclus dans le corpus d'objets satisfaisant à un critère de cooccurrence spécifique à une relation de cooccurrence souhaitée.

Une relation de cooccurrence est définie par deux caractéristiques principales : l'arité et la densité de la relation. L'arité d'une relation de cooccurrence est le caractère binaire de la relation exprimant l'appariement de deux objets, ou plus généralement le caractère n-aire de la relation exprimant le regroupement de n objets, du corpus entre eux selon un critère de cooccurrence spécifique pour former des données de cooccurrence. La densité de la relation de cooccurrence est caractérisée par le nombre de données de cooccurrence à compte fréquentiel non nul recensées dans le corpus d'objets. La densité peut être élevée ou faible.

Un exemple de relation de cooccurrence binaire de mots dans un corpus de textes linéaires concerne des locutions binaires telles que "chapeau melon" ou "tube cathodique", dont le critère de cooccurrence associé correspond à la présence de deux mots consécutifs dans le corpus, un mot étant considéré comme un objet.

Un exemple de relation de cooccurrence n-aire de mots dans un corpus de textes linéaires concerne des locutions de type nom-préposition-nom telles que "pomme de terre" ou "fourniture de bureau", le critère de cooccurrence associé correspondant à la présence de deux mots séparés par une préposition dans le corpus.

Selon un autre exemple, une relation de cooccurrence est relative à des relations sémantiques non typées entre des objets d'un corpus selon un critère de cooccurrence correspondant à une association deux à deux de mots figurant dans une fenêtre de taille fixe glissant de mots en mots dans le corpus. Une telle relation de cooccurrence est à densité élevée.

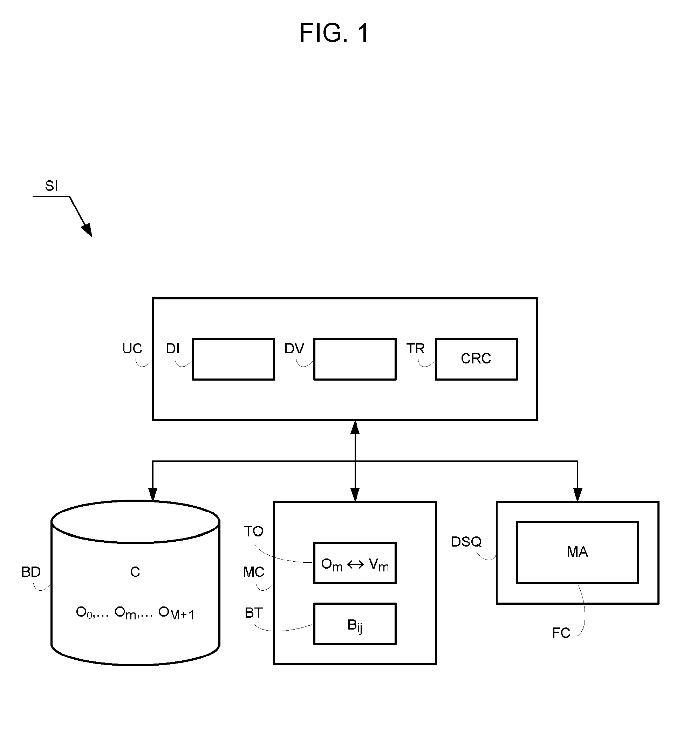

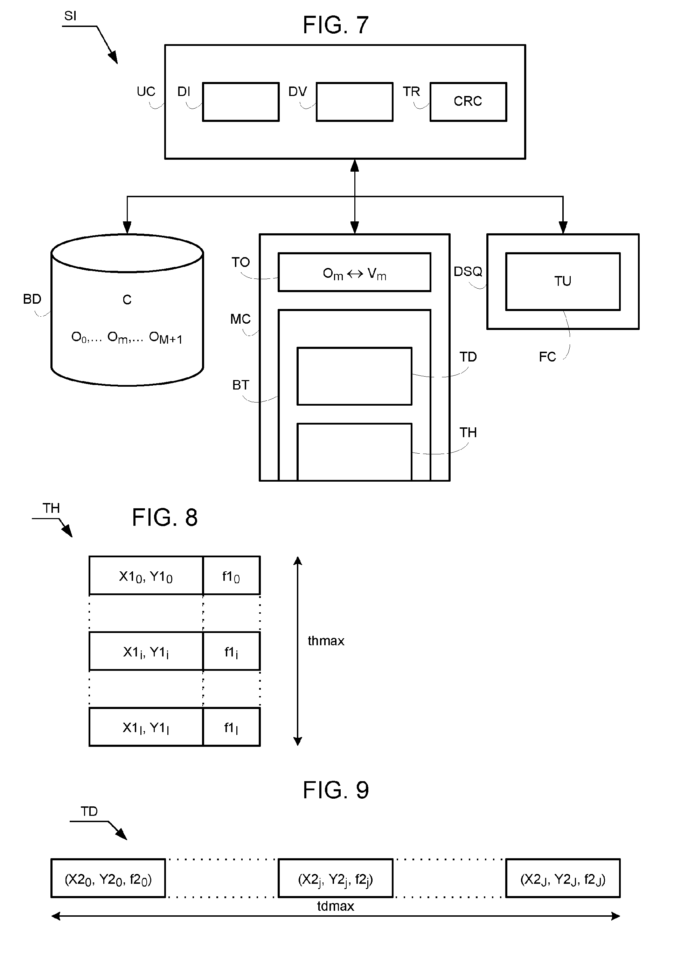

En référence aux figures 1 et 7, un **système informatique** SI mettant en oeuvre le procédé de construction de fichier de données de cooccurrence selon deux réalisations de l'invention comporte une unité centrale de traitement UC, telle qu'un processeur, contrôlant l'exécution du procédé de construction d'un fichier de données de cooccurrence et reliée par un bus à une base de données BD et à des première et deuxième mémoires MC et DSQ.

La base de données BD comprend un corpus d'objets C incluant un ensemble de textes linéaires contenant M+1 mots distincts considérés comme des objets $O_m$ avec l'indice m compris entre 0 et l'entier M.

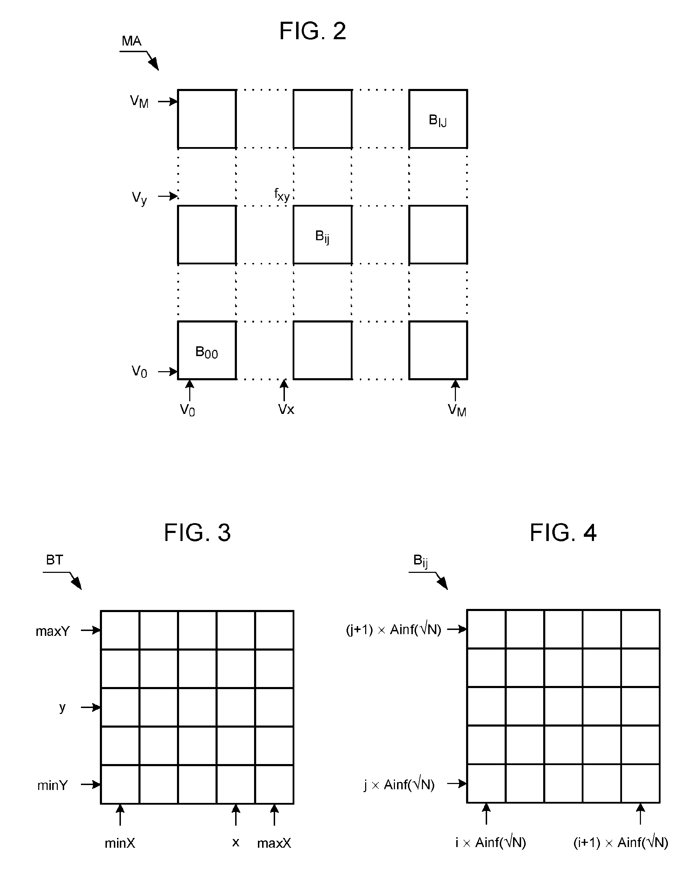

La première mémoire est une mémoire centrale MC du système, telle qu'une mémoire volatile RAM ou une mémoire non volatile EEPROM. La mémoire centrale MC comprend une table d'objets TO initialement vide destinée à faire correspondre les objets distincts $O_m$ recensés du corpus C par l'unité UC respectivement à des valeurs numériques entières $V_m$ respectives, par exemple selon un ordre croissant de un en un. La mémoire centrale MC comprend également un bloc tampon BT pour recenser et mettre à jour les données de cooccurrence extraites du corpus d'objets C et les comptes fréquentiels associés. Le bloc tampon BT, représenté à la figure 3 selon une première réalisation, ne peut contenir que E éléments et est caractérisé par une valeur minimale (minX, minY) et une valeur maximale (maxX, maxY).

La deuxième mémoire est un périphérique de stockage comprenant un support d'enregistrement comme un disque dur DSQ, et ayant une capacité nettement supérieure à celle de la première mémoire MC. L'accès au disque dur est discontinu en écriture et lecture et est moins rapide que l'accès à la mémoire centrale. Le disque dur DSQ contient le fichier de données de cooccurrence FC initialement vide qui à cause de sa taille finale importante n'est pas mémorisé dans la mémoire centrale MC. Cependant, l'accès en lecture et écriture au fichier FC par l'unité centrale UC est discontinu dans le disque dur DSQ ce qui est très pénalisant en temps de traitement. En effet, la technologie des disques durs favorise des lecture et écriture séquentielles.

Pour optimiser le temps de traitement, le fichier FC est divisé selon l'invention en blocs qui sont un par un successivement traités dans le bloc tampon BT de la mémoire centrale MC et transférés dans le fichier FC du disque dur DSQ.

Pour construire le fichier de données de cooccurrence FC, l'unité centrale UC comprend un module de dimensionnement DI, un module de division DV et un module de traitement TR. Le module DI dimensionne la taille du fichier FC lors d'une première lecture du corpus C. Le module DV divise le fichier FC en blocs. Le module TR traite chaque bloc du fichier FC dans la mémoire centrale MC lors d'une lecture du corpus C en fonction d'un critère de cooccurrence CRC et transfère le bloc traité dans le disque dur DSQ à la fin de la lecture du corpus et avant de traiter un bloc suivant. Les trois modules DI, DV et TR sont des modules logiciels fonctionnels détaillés dans la suite de la description.

Le fichier de données de cooccurrence FC est destiné à contenir toutes les données de cooccurrence recensées utiles, c'est-à-dire les données de cooccurrence associées respectivement à des comptes fréquentiels non nul. L'enregistrement des données de cooccurrence dans le fichier FC et par suite la construction du fichier FC dépendent du type de relation de cooccurrence souhaité. Deux réalisations de construction du fichier FC sont décrites ci-après.

Une **première réalisation** de construction du fichier FC est particulièrement adaptée à une relation de cooccurrence binaire à densité élevée et est mise en oeuvre dans le système informatique représenté à la figure 1. Selon cette première réalisation, le fichier de données de cooccurrence FC contient initialement la taille d'une matrice MA dont les adresses des éléments initialement nuls correspondent à des couples de valeurs numériques $(V_x, V_y)$ d'objets $O_x$, $O_y$ formés progressivement et ultérieurement lors du recensement des données de cooccurrence. La matrice sert à mémoriser les données de cooccurrence seulement recensées dans le corpus C et leurs comptes fréquentiels non nuls associés. La matrice MA est donc "virtuelle" et est représentée à la figure 2 pour une meilleure compréhension de l'invention. La matrice MA apparie chaque valeur numérique $V_x$ associée à un objet $O_x$ dans la table d'objet TO et définie sur une première rangée, telle qu'une colonne de la matrice, à chaque valeur numérique $V_y$ associée à un objet $O_y$ dans la table d'objet TO et définie sur une deuxième rangée, telle qu'une ligne de la matrice, avec les indices x et y compris entre 0 et M. Un tel appariement $(V_x, V_y)$ dans la matrice MA correspond à une donnée de cooccurrence et l'élément $MA[V_x][V_y]$ de l'appariement à l'intersection des première et deuxième rangées dans la matrice MA correspond au compte fréquentiel $f_{xy}$ associé. La matrice MA est formée de bloc de taille identique dont la taille dépend de la taille du bloc tampon BT inclus dans la mémoire centrale MC. Chaque bloc carré $B_{ij}$ formant la matrice MA, avec les indices i et j tels que $0 \leq i \leq 1$ et $0 \leq j \leq J$, doit contenir un nombre d'éléments inférieur ou égal au nombre d'éléments N du bloc tampon BT. Ainsi, comme représenté à la figure 4, chaque bloc $B_{ij}$ est caractérisé par une valeur minimale $(i \times \text{Ainf}(\sqrt{N}), j \times \text{Ainf}(\sqrt{N}))$ et une valeur maximale $((i+1) \times \text{Ainf}(\sqrt{N}), (j+1) \times \text{Ainf}(\sqrt{N}))$, où Ainf est une fonction d'arrondi inférieur. Une donnée de cooccurrence $(V_x, V_y)$ fait partie du bloc $B_{ij}$ si :

$$i \times \text{Ainf}(\sqrt{N}) \leq V_x \leq (i+1) \times \text{Ainf}(\sqrt{N}),$$

et

$$j \times \text{Ainf}(\sqrt{N}) \leq V_y \leq (j+1) \times \text{Ainf}(\sqrt{N}).$$

D'après les relations précédentes, on peut déduire que $I = J = \text{Asup}((M+1)/\sqrt{N})$, où Asup est une fonction d'arrondi supérieur.

Le bloc tampon BT illustré à la figure 3 selon une représentation à deux dimensions correspondant aux lignes y et aux colonnes x est mémorisé dans la mémoire centrale selon une représentation à une dimension. Ainsi l'accès au bloc tampon se fait colonne par colonne, chaque colonne x du bloc étant identifiée par son indice et comportant une liste de maxY couples, chacun constitué de l'indice de la ligne y et du compte fréquentiel associé à la donnée de cooccurrence (x, y).

La matrice MA est mémorisée partiellement dans le disque dur DSQ selon une représentation à une dimension. A la fin du traitement d'un bloc $B_{ij}$ dans la mémoire centrale MC, les données de cooccurrence seulement recensées et les comptes fréquentiels non nuls associés dans le bloc $B_{ij}$ traité sont mémorisés de manière contiguë de colonne en colonne dans la matrice MA, les données de cooccurrence associées à des comptes fréquentiels nuls n'étant pas mémorisées.

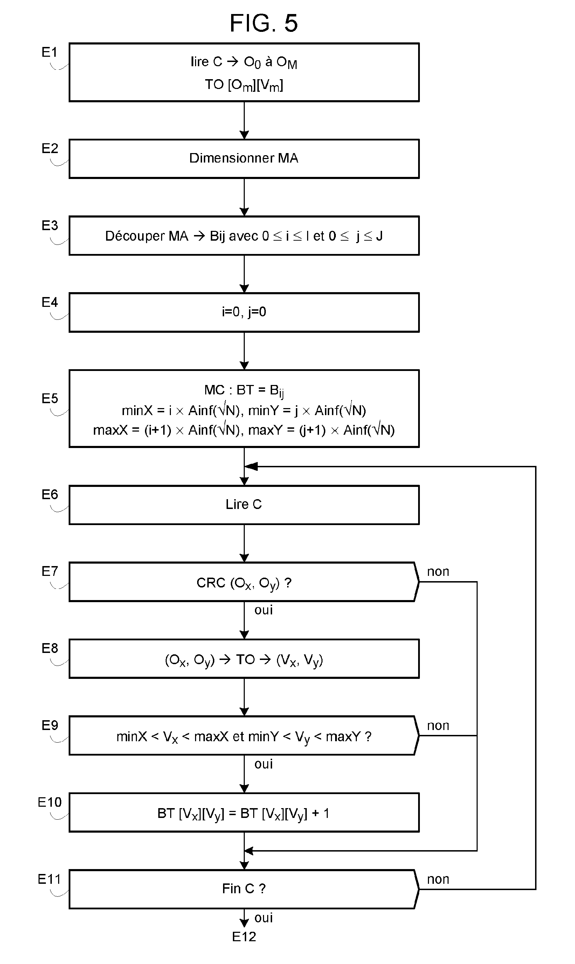

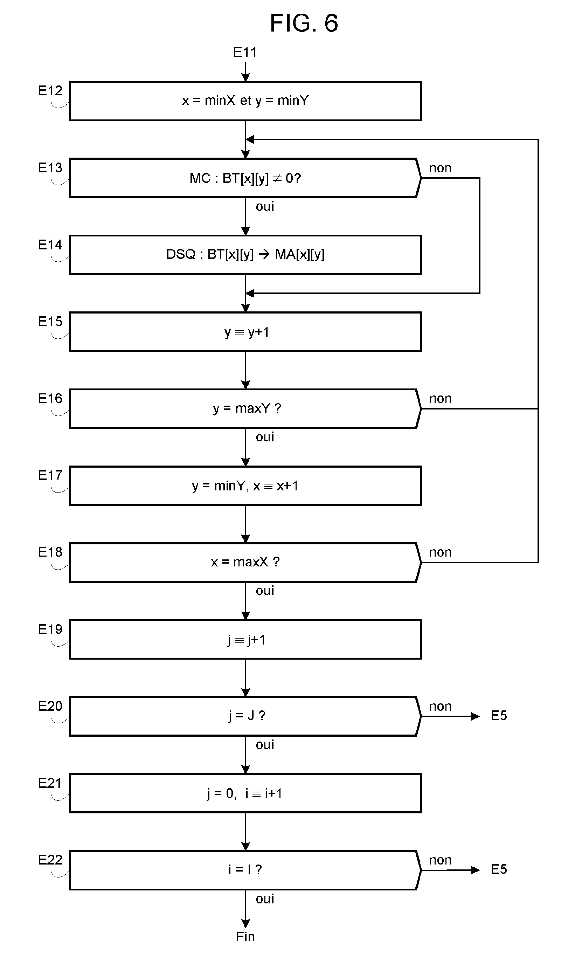

Le procédé de **construction d'une matrice MA** en tant que fichier de données de cooccurrence FC selon la première réalisation de l'invention comprend des étapes E1 à E22 représentées aux figures 5 et 6.

A l'étape E1, le module de dimensionnement DI lit le corpus d'objets C et recense M+1 objets distincts $O_0$ à $O_M$. Par exemple, dans le corpus contenant des textes linéaires, le module DI isole et extrait chaque objet-mot du texte par rapport à des moyens de séparation de mot tels que les espaces et les signes de ponctuation. Au fur et à mesure du recensement, chaque objet $O_m$ extrait du corpus est inséré dans la table d'objet TO de la mémoire centrale MC et est associé à une valeur numérique entière $V_m$, avec $V_{m-1} < V_m < V_{m+1}$ et $0 < m < M+1$. A la fin de la première lecture du corpus C, à l'étape E2, le module DI dimensionne la taille de la matrice MA dans le disque dur DSQ en fonction du nombre M+1 d'objets recensés précédemment, la taille maximale de la matrice étant de $(M+1) \times (M+1)$ éléments.

A l'étape E3, le module de division DV de l'unité centrale UC divise la taille de la matrice MA précédemment dimensionnée en $I \times J$ blocs $B_{ij}$ de taille identique en fonction de la taille N du bloc tampon BT de la mémoire centrale MC.

Après avoir mis i et j à zéro à l'étape E4, le module de traitement TR exécute à l'étape E5 une bijection d'un premier bloc $B_{ij} = B_{00}$ de la matrice MA sur le bloc tampon BT. La bijection est définie par la valeur minimale (minX, minY) du bloc tampon BT égale à la valeur minimale ($i \times$ Ainf($\sqrt{N}$), $j \times$ Ainf($\sqrt{N}$)) du bloc $B_{ij}$ et par la valeur maximale (maxX, maxY) du bloc tampon BT égale à la valeur maximale ($(i+1) \times$ Ainf($\sqrt{N}$), $(j+1) \times$ Ainf($\sqrt{N}$)) du bloc $B_{ij}$. Puis le module de traitement TR traite le bloc $B_{ij}$ dans la mémoire MC.

A l'étape E6, le module TR lance la lecture du corpus C par exemple en initialisant une fenêtre d'observation de taille fixe contenant des premiers objets successifs du corpus et destinée à se déplacer d'un objet au suivant dans le corpus à chaque observation du corpus afin que le module TR cherche à associer chaque premier objet de la fenêtre aux autres objets de ladite fenêtre. Si à l'étape E7, aucune association d'objets dans la fenêtre d'observation ne satisfait au critère de cooccurrence CRC, le module de traitement TR vérifie à l'étape E11 que la lecture arrive en fin de corpus.

Dans le cas contraire, le module TR continue la lecture du corpus C, à l'étape E7, en déplaçant la fenêtre d'observation d'un objet dans le corpus. Si à l'étape E7, un couple d'objet $O_x$, $O_y$ dans la fenêtre d'observation satisfait au critère de cooccurrence CRC, le module de traitement TR extrait les deux objets $O_x$ et $O_y$ et récupère dans la table d'objet TO les valeurs numériques $V_x$ et $V_y$ associées à ces objets, à l'étape E8. A l'étape E9, le module de traitement TR vérifie si les deux valeurs $V_x$ et $V_y$ sont comprises dans le bloc BT. Si minX $\leq V_x \leq$ maxX et minY $\leq V_y \leq$ maxY, alors la valeur BT[Vx][Vy] correspondant au compte fréquentiel $f_{xy}$ associée à la donnée de cooccurrence ($V_x$, $V_y$) dans le bloc tampon BT est incrémentée d'une unité, à l'étape E10. A l'étape E11, le module de traitement TR continue l'analyse de la fenêtre d'observation ou si cette dernière est entièrement analysée, le module TR continue la lecture du corpus C. Tant que le corpus C n'a pas été entièrement lu, le module de traitement TR fait glisser la fenêtre d'observation d'un objet au suivant dans le corpus et exécute les étapes E6 à $E_{11}$.

Une fois le corpus C entièrement lu par le module TR, celui-ci transfère les éléments non nuls du bloc $B_{ij}$ traité dans le bloc BT, en contiguë dans la matrice MA incluse dans le disque dur DSQ, aux étapes E12 à E18. Deux pointeurs x et y du bloc tampon BT se déplacent respectivement des valeurs minX et minY aux valeurs maxX et maxY afin de balayer tous les éléments du bloc BT. A l'étape E13, si le contenu de l'élément BT[x][y] n'est pas nul, il est mémorisé dans la matrice MA associé aux adresses (x, y) = ($V_x$, $V_y$), à l'étape E14. Ainsi, seules les données de cooccurrence pour lesquelles les comptes fréquentiels associés sont non nuls, sont enregistrées dans le fichier FC du disque dur DSQ. Après chaque exécution des étapes E13 et E14, le module de traitement TR incrémente d'une unité le pointeur y à l'étape E15 tant que celui-ci n'a pas atteint maxY à l'étape E16. Puis à l'étape E17, le pointeur y est réinitialisé à minY et le pointeur x est incrémenté d'une unité. Les étapes E13 à E17 sont répétées tant que le pointeur x n'a pas atteint la valeur maxX à l'étape E18.

Dès que le contenu non nul du bloc BT est entièrement transféré vers la matrice MA dans le disque dur DSQ, à l'étape E18, le module de traitement TR vide le bloc tampon BT et effectue une nouvelle bijection d'un bloc suivant $B_{i(j+1)}$ sur le bloc BT, à l'étape E5. Pour traiter de bloc en bloc, le module de traitement TR incrémente d'une unité l'indice j à l'étape E19 tant que l'indice j n'a pas atteint J à l'étape E20, réinitialise l'indice j à zéro et incrémente d'une unité l'indice i à l'étape E21 tant que l'indice i n'a pas atteint I à l'étape E22.

Les étapes E5 à E22 sont exécutées tant que tous les blocs $B_{ij}$ formant la matrice MA n'ont pas été traités, avec les indices i et j compris respectivement entre 0 et I et entre 0 et J. A chaque lecture complète du corpus C, un bloc formant la matrice MA est traité dans la mémoire MC par le module TR.

Une **deuxième réalisation** de construction du fichier de données de cooccurrence FC est particulièrement adaptée à une relation de cooccurrence binaire à densité faible ou à une relation de cooccurrence n-aire et est mise en oeuvre dans le système informatique représenté à la figure 7.

Selon cette deuxième réalisation, le fichier de données de cooccurrence FC est une table unidimensionnelle TU dans laquelle chaque donnée de cooccurrence est enregistrée sous forme d'un index numérique associé au comptage fréquentiel associé.

Dans une relation de cooccurrence binaire à densité faible, la table TU mémorise des triplets $(X_u, Y_u, f_u)$ pour lesquels l'indice u est compris entre 0 et un entier U, et l'entier U est variable et initialement nul. $(X_0, Y_0),... (X_u, Y_u),... (X_U, Y_U)$ sont les données de cooccurrence et $f_0, ... f_u, ... f_U$ est le compte fréquentiel associé. Les triplets $(X_u, Y_u, f_u)$ sont mémorisés en contigüe et de manière ordonné par une relation d'ordre total dans la table TU. Cette relation d'ordre total est définie telle que, pour deux triplets $(XA_u, YA_u, fA_u)$ et $(XB_u, YB_u, fB_u)$ :

$$(XA_u, YA_u, fA_u) < (XB_u, YB_u, fB_u) \text{ si :}$$

$$XA_u < XB_u \text{ ou}$$
$$XA_u = XB_u \text{ et } YA_u < YB_u, \text{ et}$$

$$(XA_u, YA_u, fA_u) = (XB_u, YB_u, fB_u) \text{ si :}$$

$$XA_u = XB_u \text{ et } YA_u = YB_u.$$

La table unidimensionnelle TU mémorisée dans le disque dur DSQ est considérée comme une table de dichotomie initialement vide qui s'agrandit au fur et à mesure de la lecture du corpus par l'insertion de nouvelles données de cooccurrence associées à des comptes fréquentiels non nul, $(M+1)x(M+1)$ éléments étant la taille maximale de la table TU. L'espace mémoire de la mémoire centrale MC étant trop limité pour mémoriser simultanément la totalité des données de cooccurrence, la table TU est divisée, au fur et à mesure du recensement des données de cooccurrence, en un ou plusieurs blocs de taille variable traité dans le bloc tampon BT de la mémoire centrale. Les valeurs caractéristiques minX, minY, maxX et maxY du bloc tampon BT initialement à 0 varient au cours de la lecture du corpus C. A la fin de chaque lecture du corpus, les valeurs caractéristiques du bloc variable traité dans la mémoire centrale MC correspondent aux valeurs caractéristiques du bloc BT.

Le bloc tampon BT représenté à la figure 7, comprend une table de dichotomie TD correspondant au bloc variable traité, et une table de hachage TH.

En référence à la figure 8, au fur et à mesure de leur recensement, les données de cooccurrence $(X1_i, Y1_i)$, avec l'indice i tel que $0 \le i \le I$ et I un entier variable initialement nul, sont insérées dans la table de hachage TH les unes à la suite des autres. Les données de cooccurrence $(X1_i, Y1_i)$ sont considérées comme des clés d'accès aux comptes fréquentiels associés $f1_i$ mis à jour à chaque observation desdites données $(X1_i, Y1_i)$ dans le corpus C. La taille maximale de la table de hachage est thmax et est inférieure à la taille du bloc tampon. Dès que la table de hachage est pleine, les données de cooccurrence $(X1_i, Y1_i)$ et leurs comptes fréquentiels associés $f1_i$ sont transférés dans la table de dichotomie TD.

Comme montré à la figure 9, la table de dichotomie TD contient des triplets $(X2_j, Y2_j, f2_j)$, avec l'indice j tel que $0 \le j \le J$ et J un entier variable initialement nul. $X2_0, Y2_0,...X2_j, Y2_j,... X2_J, Y2_J$ sont des données de cooccurrence et $f2_0,... f2_j,... f2_J$ leurs comptes fréquentiels associés provenant de la table de hachage TH. Les triplets $(X2_j, Y2_j, f2_j)$ sont ordonnés selon la relation d'ordre total décrite précédemment. La taille maximale de la table de dichotomie TD est tdmax, est égale à la taille du bloc tampon BT et est supérieure à la taille maximale de la table de hachage TH. Une fois que le corpus C est entièrement lu, la table de dichotomie TD correspond au bloc variable traité de la table TU avec des valeurs caractéristiques minX = $X2_0$, minY = $Y2_0$, maxX = $X2_{J-1}$, maxY = $Y2_{J-1}$ du bloc tampon BT, les triplets $(X2_j, Y2_j, f2_j)$ tels que $0 \le j \le J-1$ sont transférés selon le même ordre dans la table unidimensionnelle TU du disque dur DSQ. Lors d'une nouvelle lecture du corpus C, un nouveau bloc de la table TU est ensuite traité dans le bloc tampon BT ayant pour nouvelles valeurs caractéristiques minX=$X2_J$, minY=$Y2_J$, maxX=M+1 et maxY=M+1.

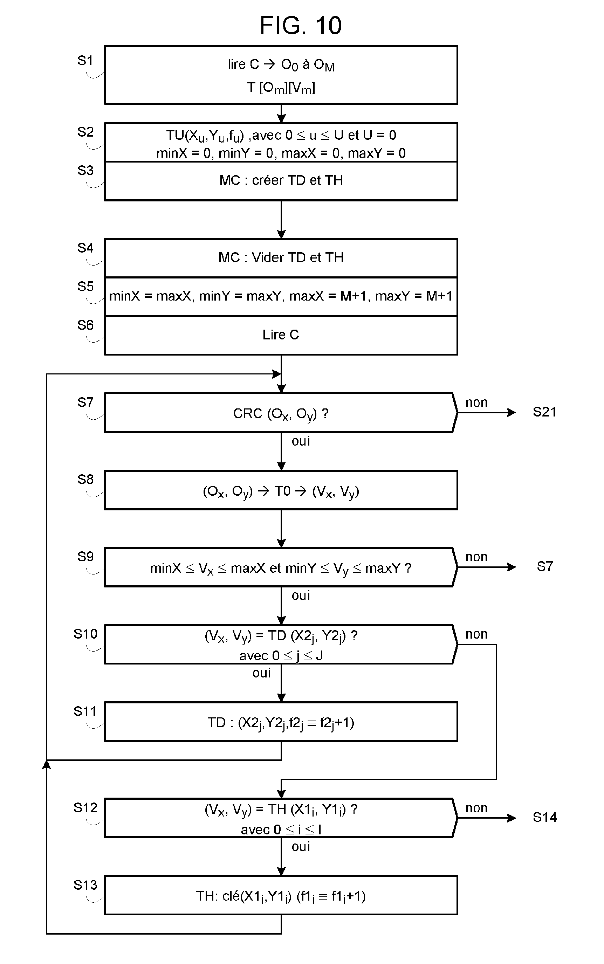

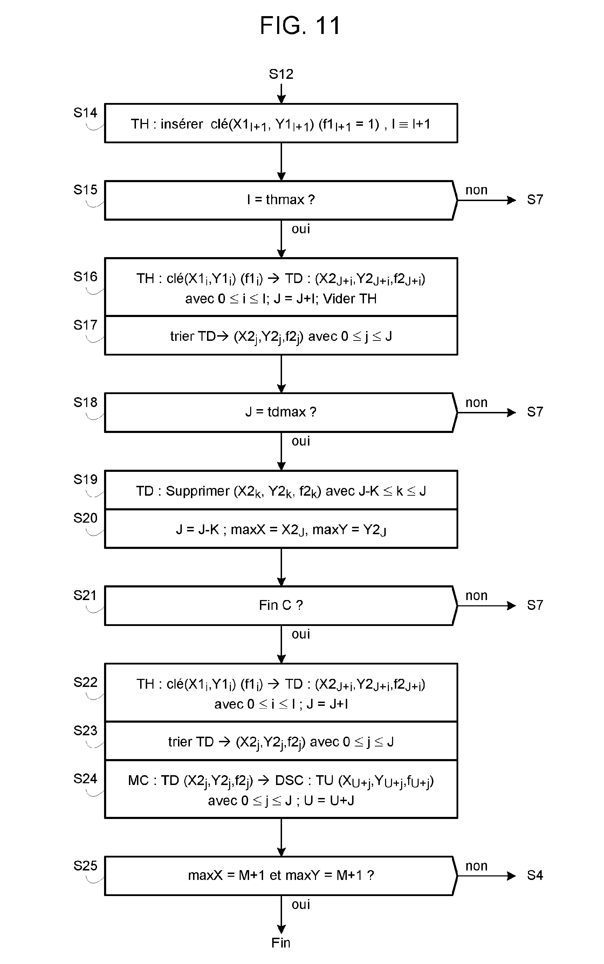

Le procédé de **construction d'une table unidimensionnelle** TU en tant que fichier de données de cooccurrence FC selon la deuxième réalisation de l'invention comprend des étapes S1 à S25 représentées aux figures 10 et 11.

L'étape S1 est analogue à l'étape E1 de la figure 5 relative à la première réalisation, pendant laquelle le module de dimensionnement DI lit le corpus d'objets C et recense M+1 objets distincts $O_0$ à $O_M$. Chaque objet $O_m$ extrait du corpus est inséré dans la table d'objet TO de la mémoire centrale MC et est associé à une valeur numérique entière $V_m$.

A la fin de la première lecture du corpus C, à l'étape S2, le module DI dimensionne la taille de la table unidimensionnelle TU dans le disque dur DSQ en fonction du nombre M+1 d'objets recensés précédemment, la taille maximale de la table TU étant de $(M+1)x(M+1)$ éléments initialement nuls. A l'étape S2, le module de division DV initialise à zéro les valeurs caractéristiques minX, minY, maxX et maxY du bloc tampon BT de la mémoire centrale MC.

A l'étape S3, le module de traitement TR crée dans le bloc tampon BT, la table de dichotomie TD et la table de hachage TH qui sont initialement vides. En variante, les tables TD et TH sont déjà créées dans le bloc tampon BT.

A l'étape S4, le module de traitement TR vide les tables TD et TH si ces dernières contenaient au préalable des données de cooccurrence et des comptes fréquentiels associés, recensées lors d'une lecture antérieure du corpus C.

A l'étape S5, le module DI de l'unité centrale dimensionne le bloc tampon BT de la mémoire centrale MC aux valeurs caractéristiques minX = maxX, minY = maxY, maxX = M+1 et maxY = M+1. Lors d'une première lecture du corpus C, les valeurs minX et minY sont nulles.

A l'étape S6, le module TR lance la lecture du corpus C par exemple en initialisant une fenêtre d'observation de taille fixe contenant P premiers objets successifs du corpus et destinée à se déplacer d'un objet au suivant dans le corpus à chaque observation du corpus afin que le module TR cherche à associer chaque premier objet de la fenêtre aux autres objets de ladite fenêtre. Si à l'étape S7, aucune association d'objets dans la fenêtre d'observation ne satisfait au critère de cooccurrence CRC, le module de traitement TR vérifie à l'étape S21 la fin de la lecture du corpus.

Si la lecture du corpus n'est pas terminée à l'étape E21, le module TR continue la lecture du corpus C, à l'étape S7, en déplaçant la fenêtre d'observation d'un objet dans le corpus. Si à l'étape S7, un couple d'objet $O_x$, $O_y$ dans la fenêtre d'observation satisfait au critère de cooccurrence CRC, le module de traitement TR extrait les deux objets $O_x$ et $O_y$ et récupère dans la table d'objet TO les valeurs numériques $V_x$ et $V_y$ associées, à l'étape S8. A l'étape S9, le module de traitement TR vérifie si les deux valeurs $V_x$ et $V_y$ sont comprises entre les valeurs caractéristiques du bloc BT. Si les valeurs $V_x$ et $V_y$ ne sont pas comprises entre les valeurs caractéristiques du bloc BT, le module TR continue l'analyse de la fenêtre d'observation à l'étape S7. En revanche, à l'étape S9, si minX $\leq V_x \leq$ maxX et minY $\leq V_y \leq$ maxY, le module TR vérifie si la donnée de cooccurrence ($V_x$, $V_y$) est présente dans la table de dichotomie TD dans le bloc tampon BT, à l'étape S10. Pour cela, le module de traitement TR compare les valeurs $V_x$ et $V_y$ à chaque donnée de cooccurrence ($X2_j$, $Y2_j$) mémorisée dans la table TD, avec $0 \leq j \leq J$. Si $V_x = X2_j$ et $V_y = Y2_j$, alors le compte fréquentiel $f2_j$ associé à la donnée ($X2_j$, $Y2_j$) est incrémenté d'une unité, à l'étape S11.

A l'étape S10, si la donnée de cooccurrence ($V_x$, $V_y$) est absente dans la table TD, le module TR vérifie si ladite donnée ($V_x$, $V_y$) est présente dans la table de hachage TH, à l'étape S12. Pour cela, le module TR compare les valeurs $V_x$ et $V_y$ à chaque clé d'accès ($X1_i$, $Y1_i$) mémorisée dans la table TH, avec $0 \leq i \leq I$. Si $V_x = X1_i$ et $V_y = Y1_i$, alors le compte fréquentiel $f1_i$ associé à la clé d'accès ($X1_i$, $Y1_i$) est incrémenté d'une unité, à l'étape S13.

A l'étape S12, si la donnée de cooccurrence ($V_x$, $V_y$) n'est pas présente dans la table TH, le module de traitement TR de l'unité centrale UC insère à la fin de la table TH une nouvelle clé d'accès ($X1_{I+1}$,$Y1_{I+1}$) avec $X1_{I+1} = V_x$ et $Y1_{I+1} = V_y$, et associée à un compte fréquentiel $f1_{I+1}$ de valeur 1, à l'étape S14. La taille courante I de la table TH est ensuite incrémentée d'une unité.

A l'étape S15, le module TR vérifie si la table de hachage est pleine. Si la taille courante I de la table TH n'est pas égale à la taille maximale thmax de la table TH, le module TR continue la lecture du corpus à l'étape S7. Dans le cas contraire, le module TR transfère depuis la table de hachage TH chaque clé ($X1_i$, $Y1_i$) et le compte fréquentiel associé $f1_i$, pour i compris entre 0 et I, dans un nouveau triplet ($X2_{J+i}$, $Y2_{J+i}$, $f2_{J+i}$) inséré à la fin de la table de dichotomie TD, à l'étape S16. A la fin de l'étape S16, la taille courante J de la table TD est incrémentée de la valeur I, puis le module TR vide la table de hachage TH ce qui correspond à une valeur de I nulle.

A l'étape S17, le module TR trie la table de dichotomie TD selon l'ordre total défini précédemment.

A l'étape S18, le module TR vérifie si la table de dichotomie TD est pleine. Si la taille courante J de la table TD n'est pas égale à la taille maximale tdmax de la table TD, le module TR continue l'analyse du corpus à l'étape S7. Dans le cas contraire, le module TR écrête la table de dichotomie en supprimant K derniers triplets ($X2_k$, $Y2_k$, $f2_k$) de la table de dichotomie TD, à l'étape S19, pour k compris entre J-K et J. La valeur K est judicieusement choisie afin d'éviter un deuxième écrêtage de la table de dichotomie avant la fin de la lecture du corpus C et afin d'éviter une suppression trop importante de triplets dont le temps de traitement correspond à un temps de traitement inutile. Par exemple, la valeur K peut correspondre à trente pourcent de la taille de la table de dichotomie.

A l'étape S20, la taille J est décrémentée de la valeur K, et le module de dimensionnement DI modifie les valeurs caractéristiques maximales du bloc tampon BT qui sont égales aux valeurs numériques $X2_J$ et $Y2_J$ du dernier triplet de la table TD écrêtée. Ainsi, si la lecture du corpus C n'est pas terminée, à l'étape E21, seules les données de cooccurrence ($V_x$, $V_y$) recensées durant la suite de la lecture du corpus C, avec $V_x <$ maxX et $V_y <$ maxY sont analysées dans le bloc tampon BT aux étapes S14 à S20. Un nouvel écrêtage de la table de dichotomie peut avoir lieux, si la table de dichotomie TD est à nouveau pleine, les valeurs caractéristiques maximales maxX et maxY sont de nouveau modifiées en fonction de l'écrêtage de la table de dichotomie.

Tant que la lecture du corpus C n'est pas terminée, les modules TR et DI exécutent les étapes S7 à S21. Dès la fin de la lecture du corpus C, à l'étape S22, le module TR transfère depuis la table de hachage TH chaque clé ($X1_i$, $Y1_i$) et le compte fréquentiel associé $f1_i$, pour i compris entre 0 et I, dans un nouveau triplet ($X2_{J+i}$, $Y2_{J+i}$, $f2_{J+i}$) inséré à la fin de la table de dichotomie TD. A la fin de l'étape S22, la taille J de la table TD est incrémentée de la valeur I. A l'étape S23, le module TR trie la table de dichotomie TD selon l'ordre total défini précédemment.

A l'étape S24, le module TR transfère depuis la table de dichotomie TD chaque triplet ($X2_j$, $Y2_j$, $f2_j$) et le compte fréquentiel associé $f2_j$, pour j compris entre 0 et J, dans un nouveau triplet ($X_{U+j}$, $Y_{U+j}$, $f_{U+j}$) inséré à la fin de la table unidimensionnelle TU dans le disque dur DSQ. La taille U de la table TU est ensuite incrémentée de la valeur J.

A l'étape S25, le module TR vérifie si toutes les données de cooccurrence du corpus C ont été recensées en comparant les valeurs maximales du bloc tampon BT au nombre total M+1 d'objets présents dans le corpus. Si maxX et maxY sont respectivement égaux à la valeur M+1, alors la lecture du corpus C est terminée. Dans le cas contraire, aux étapes S4 et S6, le module de traitement TR vide les tables TD et TH, avec J = 0 et 1 = 0, et le module de dimensionnement DI redimensionne le bloc tampon BT aux valeurs caractéristiques minX = maxX, minY = maxY, maxX = M+1 et maxY = M+1, afin de traiter un nouveau bloc de la table unidimensionnelle TU.

En fin de lecture du corpus, seules les données de cooccurrence associées à un compte fréquentiel non nul sont recensées dans la table unidimensionnelle TU.

En variante, dans le cas d'une relation de cooccurrence d'arité variable, le système et le procédé sont sensiblement analogues à la deuxième réalisation de l'invention et le fichier de données de cooccurrence correspond toujours à une table unidimensionnelle. Cependant pour ramener la relation d'arité variable à une relation d'arité fixe, on agrandit l'ensemble des objets regroupés dans une donnée de cooccurrence par de nouveaux éléments indéfinis notés "indf". Ainsi, si n est l'arité maximale de la relation, alors tout p-uplet $(X_1,X_2,...,X_p)$ représentatif d'une donnée de cooccurrence recensée selon une relation p-aire avec p < n, peut être représenté par un n-uplet tel que :

$$(X_1, X_2, ..., X_p, X_{p+1} = \text{indf}, X_{p+2} = \text{indf}, ..., X_n = \text{indf}).$$

La relation d'ordre total entre n-uplet est définie pour deux n-uplets $(X1_1,X1_2,...,X1_n,f1_n)$ et $(X2_1,X2_2,...,X2_n, f2_n)$ par :

$$(X1_1, X1_2, ..., X1_n, f1_n) < (X2_1, X2_2, ..., X2_n, f2_n)$$

s'il existe $p \leq n$ tel que pour tout i < p,

- $X1_i = X2_i$ et
- $X1_p < X2_p$ ou $X1_p = \text{indf}$ et $X2_p \neq \text{indf}$.

L'algorithme selon la deuxième réalisation reste inchangé à l'exception du remplacement des couples formant les données de cooccurrence par des n-uplets.

Un tel fichier de cooccurrence construit selon le procédé de l'invention est particulièrement adapté pour construire des bases de connaissance aussi bien linguistiques que sémantiques. Ces bases de connaissance peuvent de manière non exhaustive être utilisées dans un procédé de reformulation de requête de recherche dans un moteur de recherche. Ces bases de connaissance peuvent aussi être utilisées pour de l'indexation de documents, pour effectuer automatiquement des résumés de documents ou encore pour effectuer de la catégorisation de documents, c'est-à-dire pour classer des documents dans différentes rubriques.

L'invention décrite ici concerne un procédé et un système informatique de construction d'un fichier de données de cooccurrence. Selon une implémentation préférée, les étapes du procédé sont déterminées par les instructions d'un programme incorporé en mémoire du système informatique tel qu'un serveur de données ou un ordinateur. Le programme comporte des instructions de programme qui, lorsque ledit programme est chargé et exécuté dans le système informatique dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

**Revendications**

1. - Procédé pour construire un fichier de données de cooccurrence (FC) relatif à un corpus d'objets (C) dans un système informatique (SI) comprenant des première et deuxième mémoires (MC, DSQ), **caractérisé en ce qu'**il comprend les étapes de :

dimensionner (E2, S2) la taille du fichier de données de cooccurrence par un recensement d'objets distincts dans le corpus,
diviser (E3, S5, S20) la taille du fichier de données de cooccurrence en blocs ($B_{ij}$, TD) occupant un espace mémoire au plus égal à la taille d'un bloc tampon (BT) de la première mémoire, chaque bloc du fichier faisant correspondre des objets recensés entre eux,
traiter chaque bloc du fichier en lisant (E6, S6) le corpus et en incrémentant (E10, S11, S13, S14) d'une unité un compte fréquentiel ($f_{xy}$) associé à des objets du bloc si ces objets sont groupés (E9, S9) dans le corpus lu en satisfaisant à un critère de cooccurrence (CRC), chaque groupement d'objets correspondant à une donnée de cooccurrence, et
transférer (E14, S24) les données de cooccurrence et leurs comptes fréquentiels associés non nuls depuis le bloc tampon de la première mémoire vers le fichier de données de cooccurrence dans la deuxième mémoire.

2. - Procédé conforme à la revendication 1, selon lequel le fichier de données de cooccurrence est une matrice (MA) faisant correspondre des objets distincts du corpus entre eux, la matrice étant divisée en blocs (Bij) de taille identique au plus égale à la taille (N) du bloc tampon (BT) de la première mémoire (MC), chaque bloc étant traité dans la première mémoire pendant une lecture du corpus d'objet et les données de cooccurrence et leurs comptes fréquentiels associés non nuls dans le bloc traité sont transférés dans la matrice.

3. - Procédé conforme à la revendication 1, selon lequel le fichier de cooccurrence (FC) est une table unidimensionnelle (TU) initialement nulle, et chaque bloc (TD) traité dans la première mémoire (MC) et appartenant à la table unidimensionnelle varie en fonction de la taille (tdmax) du bloc tampon et du nombre maximal de données de cooccurrence du corpus d'objets non encore recensées dans la table unidimensionnelle.

4. - Procédé conforme à la revendication 3, selon lequel le traitement d'un bloc de la table unidimensionnelle dans le bloc tampon comprend les étapes de :

dimensionner le bloc tampon par des données caractéristiques minimales (minX, minY) et maximales (maxX, maxY) en fonction du nombre d'objets distincts recensés dans le corpus d'objets (C),
remplir (S14) au fur et à mesure de la lecture du corpus (C) une table de hachage (TH) incluse dans le bloc tampon (BT) avec des données de cooccurrence (Vx, Vy) distinctes et respectivement associées à des comptes fréquentiels, les données de cooccurrence étant comprises entre les données caractéristiques minimales et maximales du bloc tampon,
transférer (S16) toutes les données de cooccurrence et les comptes fréquentiels associés de la table de hachage vers le bloc traité (TD) dès que la table de hachage est pleine, les données de cooccurrence et les comptes fréquentiels associés étant triés (S17) selon un ordre spécifique dans le bloc traité,
écrêter le bloc traité si le bloc tampon est plein (S18) et redimensionner (S19-S20) les données caractéristiques minimales et maximales du bloc tampon en fonction de l'écrêtage du bloc traité,
réitérer les trois étapes précédentes tant que la lecture du corpus d'objets n'est pas terminée, et
transférer (S24) toutes les données de cooccurrence et les comptes fréquentiels associés depuis le bloc traité dans le bloc tampon vers la table unidimensionnelle de la deuxième mémoire à la fin de la lecture du corpus d'objets (C).

5. - Procédé conforme à l'une quelconque des revendications 1 à 4, selon lequel l'étape de dimensionner comprend un recensement de tous les objets distincts ($O_m$) lors d'une première lecture du corpus d'objets (C), et une insertion de chaque objet recensé dans une table d'objet (TO) incluse dans la première mémoire (MC) et faisant correspondre chaque objet distinct à une valeur numérique ($V_m$).

6. - Système informatique (SI) comprenant des première et deuxième mémoires (MC, DSQ) pour construire un fichier de données de cooccurrence (FC) relatif à un corpus d'objets (C), **caractérisé en ce qu'**il comprend :

un moyen (DI) pour dimensionner la taille du fichier de données de cooccurrence par un recensement d'objets distincts dans le corpus,

un moyen (DV) pour diviser la taille du fichier de données de cooccurrence en blocs ($B_{ij}$, TD) occupant un espace mémoire au plus égal à la taille d'un bloc tampon (BT) de la première mémoire, chaque bloc du fichier faisant correspondre des objets recensés entre eux,

un moyen (TR) pour traiter chaque bloc du fichier en lisant le corpus et en incrémentant d'une unité un compte fréquentiel ($f_{xy}$) associé à des objets du bloc si ces objets sont groupés (E9, S9) dans le corpus lu en satisfaisant à un critère de cooccurrence (CRC), chaque groupement d'objets correspondant à une donnée de cooccurrence, et

un moyen (TR) pour transférer les données de cooccurrence et leurs comptes fréquentiels associés non nuls depuis le bloc tampon de la première mémoire vers le fichier de données de cooccurrence dans la deuxième mémoire.

**7.** - Système informatique conforme à la revendication 6, dans lequel la première mémoire est une mémoire centrale de processeur (MC) et la deuxième mémoire est un périphérique de stockage (DSQ).

**8.** - Programme d'ordinateur apte à être mis en oeuvre dans un système informatique (SI) comprenant des première et deuxième mémoires pour construire un fichier de données de cooccurrence (FC) relatif à un corpus d'objets (C), ledit programme étant **caractérisé en ce qu'**il comprend des instructions qui, lorsque le programme est chargé et exécuté dans ledit système informatique, réalisent les étapes conformes au procédé selon l'une des revendications 1 à 5.

**9.** - Procédé de reformulation automatique d'une requête de recherche dans une application de recherche, **caractérisé en ce qu'**il comprend une étape de construction d'une base de connaissance à partir d'un fichier de cooccurrence construit selon un procédé conforme à l'une quelconque des revendications 1 à 5.

# FIG. 1

SI

UC DI DV TR CRC

BD C $O_0, \ldots O_m, \ldots O_{M+1}$

TO MC $O_m \leftrightarrow V_m$ BT $B_{ij}$

DSQ MA FC

# FIG. 2

MA

$V_M$

$V_y$

$f_{xy}$

$B_{IJ}$

$B_{ij}$

$V_0$

$B_{00}$

$V_0$   $V_x$   $V_M$

# FIG. 3

BT

maxY

y

minY

minX   x   maxX

# FIG. 4

$B_{ij}$

$(j+1) \times Ainf(\sqrt{N})$

$j \times Ainf(\sqrt{N})$

$i \times Ainf(\sqrt{N})$   $(i+1) \times Ainf(\sqrt{N})$

# FIG. 5

E1 — lire C → $O_0$ à $O_M$
TO $[O_m][V_m]$

E2 — Dimensionner MA

E3 — Découper MA → Bij avec $0 \leq i \leq I$ et $0 \leq j \leq J$

E4 — i=0, j=0

E5 — MC : BT = $B_{ij}$
minX = i × Ainf($\sqrt{N}$), minY = j × Ainf($\sqrt{N}$)
maxX = (i+1) × Ainf($\sqrt{N}$), maxY = (j+1) × Ainf($\sqrt{N}$)

E6 — Lire C

E7 — CRC ($O_x$, $O_y$) ?  →  non
oui

E8 — ($O_x$, $O_y$) → TO → ($V_x$, $V_y$)

E9 — minX < $V_x$ < maxX et minY < $V_y$ < maxY ?  →  non
oui

E10 — BT $[V_x][V_y]$ = BT $[V_x][V_y]$ + 1

E11 — Fin C ?  →  non
oui
E12

# FIG. 6

## FIG. 7

## FIG. 8

## FIG. 9

## FIG. 10

S1 — lire C → $O_0$ à $O_M$
T $[O_m][V_m]$

S2 — TU($X_u,Y_u,f_u$) ,avec $0 \leq u \leq U$ et U = 0
minX = 0, minY = 0, maxX = 0, maxY = 0

S3 — MC : créer TD et TH

S4 — MC : Vider TD et TH

S5 — minX = maxX, minY = maxY, maxX = M+1, maxY = M+1

S6 — Lire C

S7 — CRC ($O_x$, $O_y$) ?  → non → S21
oui

S8 — ($O_x$, $O_y$) → T0 → ($V_x$, $V_y$)

S9 — minX $\leq V_x \leq$ maxX et minY $\leq V_y \leq$ maxY ?  → non → S7
oui

S10 — ($V_x$, $V_y$) = TD ($X2_j$, $Y2_j$) ?
avec $0 \leq j \leq J$  → non
oui

S11 — TD : ($X2_j,Y2_j,f2_j \equiv f2_j+1$)

S12 — ($V_x$, $V_y$) = TH ($X1_i$, $Y1_i$) ?
avec $0 \leq i \leq I$  → non → S14
oui

S13 — TH: clé($X1_i,Y1_i$) ($f1_i \equiv f1_i+1$)

# FIG. 11

S12

S14 — TH : insérer clé$(X1_{I+1}, Y1_{I+1})$ $(f1_{I+1} = 1)$ , $I \equiv I+1$

S15 — $I = thmax$ ? — non → S7

oui

S16 — TH : clé$(X1_i, Y1_i)$ $(f1_i)$ → TD : $(X2_{J+i}, Y2_{J+i}, f2_{J+i})$ avec $0 \leq i \leq I$; $J = J+I$; Vider TH

S17 — trier TD→ $(X2_j, Y2_j, f2_j)$ avec $0 \leq j \leq J$

S18 — $J = tdmax$ ? — non → S7

oui

S19 — TD : Supprimer $(X2_k, Y2_k, f2_k)$ avec $J-K \leq k \leq J$

S20 — $J = J-K$ ; $maxX = X2_J$, $maxY = Y2_J$

S21 — Fin C ? — non → S7

oui

S22 — TH : clé$(X1_i, Y1_i)$ $(f1_i)$ → TD : $(X2_{J+i}, Y2_{J+i}, f2_{J+i})$ avec $0 \leq i \leq I$ ; $J = J+I$

S23 — trier TD → $(X2_j, Y2_j, f2_j)$ avec $0 \leq j \leq J$

S24 — MC : TD $(X2_j, Y2_j, f2_j)$ → DSC : TU $(X_{U+j}, Y_{U+j}, f_{U+j})$ avec $0 \leq j \leq J$ ; $U = U+J$

S25 — $maxX = M+1$ et $maxY = M+1$ ? — non → S4

oui

Fin

# EP 1 939 767 A1

**Office européen des brevets**

## RAPPORT DE RECHERCHE EUROPEENNE

Numéro de la demande

EP 07 12 2997

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SHIEH W-Y ET AL: "Inverted file compression through document identifier reassignment"<br>INFORMATION PROCESSING & MANAGEMENT, ELSEVIER, BARKING, GB,<br>vol. 39, no. 1, janvier 2003 (2003-01), pages 117-131, XP004397215<br>ISSN: 0306-4573 | 1-3,5-8 | INV.<br>G06F17/30 |
| Y | * page 120, ligne 3-9 *<br>3.3 Matrix partitioning<br>* pages 123-124 *<br>* figure 2 *<br>----- | 9 | |
| X | MCKELLAR A C ET AL: "Organizing Matrices and Matrix Operations for Paged Memory Systems"<br>COMMUNICATIONS OF THE ASSOCIATION FOR COMPUTING MACHINERY, ACM, NEW YORK, NY, US,<br>vol. 12, no. 3, mars 1969 (1969-03), pages 153-165, XP007902169<br>ISSN: 0001-0782 | 1-3,5-8 | |
| | | | **DOMAINES TECHNIQUES RECHERCHES (IPC)** |
| Y | * abrégé *<br>* page 153, colonne de gauche, ligne 1 - page 154, colonne de droite, ligne 26 *<br>----- | 9 | G06F |
| Y | US 5 675 819 A (SCHUETZE HINRICH [US])<br>7 octobre 1997 (1997-10-07) | 9 | |
| A | * le document en entier *<br>----- | 1,6,8 | |
| Y | US 6 314 419 B1 (FAISAL MOHAMMAD [US])<br>6 novembre 2001 (2001-11-06) | 9 | |
| A | * le document en entier *<br>----- | 1,6,8 | |
| A | US 6 411 962 B1 (KUPIEC JULIAN M [US])<br>25 juin 2002 (2002-06-25)<br>* le document en entier *<br>----- | 1,6,8,9 | |

Le présent rapport a été établi pour toutes les revendications

| Lieu de la recherche | Date d'achèvement de la recherche | Examinateur |
|---|---|---|
| La Haye | 5 mars 2008 | Denoual, Matthieu |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

19

**ANNEXE AU RAPPORT DE RECHERCHE EUROPEENNE
RELATIF A LA DEMANDE DE BREVET EUROPEEN NO.**

EP 07 12 2997

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-03-2008

| Document brevet cité au rapport de recherche | | Date de publication | Membre(s) de la famille de brevet(s) | | Date de publication |
|---|---|---|---|---|---|
| US 5675819 | A | 07-10-1997 | DE | 69530958 D1 | 10-07-2003 |
| | | | DE | 69530958 T2 | 11-12-2003 |
| | | | EP | 0687987 A1 | 20-12-1995 |
| | | | JP | 3771299 B2 | 26-04-2006 |
| | | | JP | 8006971 A | 12-01-1996 |
| US 6314419 | B1 | 06-11-2001 | AUCUN | | |
| US 6411962 | B1 | 25-06-2002 | AUCUN | | |

EPO FORM P0460

Pour tout renseignement concernant cette annexe : voir Journal Officiel de l'Office européen des brevets, No.12/82